# EUROPEAN PATENT SPECIFICATION

(11) **EP 4 314 547 B1**
(45) Date of publication and mention of the grant of the patent: **05.03.2025**
(21) Application number: 22717118.8
(22) Date of filing: 21.03.2022
(51) Int. Cl.: F03D 13/10, F03D 13/25, F03D 13/40, F03D 80/50

(54) **OPERATIONS AND MAINTENANCE ARRANGEMENT AND METHOD**
BETRIEBS- UND WARTUNGSANORDNUNG UND -VERFAHREN
AGENCEMENT ET PROCÉDÉ D'ENTRETIEN ET DE MAINTENANCE

(30) Priority: 23.03.2021 NO 20210374
(43) Date of publication of application: 07.02.2024
(73) Proprietor: FRED. OLSEN OCEAN LTD., 0106 Oslo (NO)
(72) Inventor: GRIMSRUD, Geir, 1555 Son (NO)
(74) Representative: Bryn Aarflot AS
(86) International application number: PCT/EP2022/057340
(87) International publication number: WO 2022/200268

(56) References cited:
- EP-A1- 3 767 103
- WO-A1-2012/038487
- WO-A1-2020/043256
- US-A1- 2019 338 757

## Description

### Technical Field

The present invention relates to an operations and maintenance arrangement for floating wind turbines as well as a method of performing main component exchange, such as replacing wind turbine blades and gear units, of a floating wind turbine.

### Background Art

Crane operations at sea are challenging, especially when the unit on which the operations are to be done is a floating unit. There are in principle two ways to do this. The first is to deploy a vessel having a suitable crane next to the floating unit and use this crane to move objects between the vessel (or a separate vessel) and the floating unit. The second way is to arrange a crane on the floating unit and use this crane to move objects between a support vessel and the floating unit as well as performing operations, such as installations on board the floating unit.

In the first alternative, all operations have to be done while both the vessel and the unit are moving due to wave motions. This requires sophisticated heave compensation and can only be done during relatively calm conditions.

The second alternative requires heave compensation only during loading or unloading of the vessel, but it requires the installation of a crane on board the floating unit having the wind turbine.

There are several examples of a floating wind turbine having a crane installed thereon:

DE19741988 shows a wind turbine where a crane is temporarily attached to the tower of the wind turbine. The crane is capable of moving up and down along the tower.

DE19647515 shows a similar crane that is capable of installing further tower sections on top of the tower section to which the crane is attached.

US20180282134 also shows a crane that is attached to the tower of the wind turbine and is capable of moving up and down the tower. The crane is adapted to replace the blades of the wind turbine.

DE102012002720A1 shows yet another crane that is attached to a tower structure

US9120652 shows a wind turbine where a small service crane is arranged inside the nacelle. A hatch is opened through which the crane can emerge when there is a need for the service crane.

GB2558242A shows a larger service crane arranged on top of the nacelle.

WO2020167137 shows examples where a crane is arranged on a support vessel, but the support vessel is attached to the foundation of the wind turbine.

WO2020043254 shows a support vessel where at least a portion of a sole crane is lifted onto a support structure above the vessel. The system compensates for the relative motion between the vessel and the support structure.

WO2020043256 relates to a method for installing a crane on a portion of an offshore wind turbine generator from a vessel, where a removable crane adapter having a first coupling to the portion of the offshore wind turbine generator.

In all of the known solutions, except for WO2020167137, the crane is arranged on the tower of the wind turbine. This means that the tower must be designed to carry both the crane and the load of the crane. It also must have an outer surface to which the crane can be attached. Moreover, the reach of the crane is limited by this placement, and care must be taken so that the crane does not interfere with the rotor and the blades.

If the crane is not permanently attached to the tower, it will be cumbersome to install and remove the crane each time it is needed. If it is permanently attached, maintenance is a challenge.

It is therefore a need of a crane that is more versatile, and which can be used on a wide range of floating wind turbines without the tower being designed to carry the crane. It is also a desire that the crane is easy to install without requiring a particularly heavy-lift crane.

Further, WO2012038487 describes a process for installing an offshore tower, where a gravity-based structure is resting on the sea floor, and a crane is placed on this structure. This publication does not describe a semi-submersible sub-structure floating in the water. Further, since the crane is placed on the gravity-based structure, this solution does not have take into account any relative movements between the crane and the substructure, caused by wave motion.

### Summary of invention

These objectives are achieved by an operations and maintenance arrangement for floating wind turbines, comprising a floating sub-structure on which at least one wind turbine unit is situated, a service operation vessel and a portable crane, said floating sub-structure having an interface capable of receiving and fixedly locking said crane to said sub-structure, said service operation vessel having a ship crane capable of lifting said portable crane from said vessel and onto said sub-structure.

According to the invention the arrangement comprises a support to receive components, such as wind turbine blades or gear units, to be installed on the wind turbine, said support having an interface to mate and fixedly lock with an interface on said floating sub-structure. This ensures that the portable crane may lift the components without having to take relative movement due to wave action into account.

If the component is wind turbine blades, it is preferred that it is arranged in a cradle, and if there are several blades, that they are stacked in a multiple of cradles.

In the case of the component being several blades, it is preferred that they are stacked in height in the cradles. This takes up less space on the deck of the support vessel and the stack can be lifted as a unit.

Conveniently, the support is a truss beam, which results in low weight but high strength.

If the floating sub structure has at least two pontoons, one pontoon can receive the portable crane and the other the support with the components.

By remotely operating the portable crane from the support vessel, the risk of having personnel on board the floating wind turbine is eliminated.

According to a method of replacing components, such as wind turbine blades or gear units, of a floating wind turbine, it comprises the steps of deploying a service operation vessel next to a floating wind turbine, lifting, using a ship crane on said vessel, a portable crane from said vessel onto a sub-structure of said floating wind turbine, fixedly locking said portable crane to said sub-structure, lifting component support onto said sub-structure, fixedly locking said component support to said sub-structure, lifting a component to be replaced from said wind turbine onto said component support, using said portable crane, lifting said component from said component support onto said vessel, lifting a new component onto said component support, lifting said new component onto said wind turbine and attaching it to where said component to be replaced used to be, lifting said empty support onto said vessel, and lifting said portable crane onto said vessel, using said ship crane.

In a preferred embodiment, adapted for replacement of wind turbine blades, it comprises the steps of lifting worn blades one by one from a rotor of said wind turbine onto said support, using said portable crane, lifting a stack of said worn blades from said blade support onto said vessel, lifting a stack of new blades onto said blade support, and lifting said new blades one by one to said rotor, using said portable crane.

### Brief description of drawings

The invention will now be described in further detail by an exemplary embodiment shown in the enclosed drawings, in which:
Figure 1 shows the arrangement of the invention as the service operation vessel is being deployed next to the floating wind turbine,
Figure 2 shows the portable crane being lifted off the deck of the vessel,
Figure 3 shows the portable crane having been installed on the floating sub-structure of the wind turbine,
Figure 4 shows a support for wind turbine blades having been installed on the sub-structure,
Figure 5 shows a first worn blade having been lifted from the rotor to the support,
Figure 6 shows a second worn blade having been lifted from the rotor to the support,
Figure 7 shows a third worn blade having been lifted from the rotor to the support,
Figure 8 shows the stack of worn blades being lifted from the support to the vessel,
Figure 9 shows the stack of worn blades having been placed on said vessel,
Figure 10 shows the stack of new blades having been lifted onto the support,
Figure 11 shows the new blades having been installed on the rotor, and
Figure 12 shows the support and the portable crane having been lifted onto the vessel.

### Detailed description of the invention

Although the following description of an embodiment describes in detail a replacement of turbine blades, it should be understood that the arrangement and method can be used for other types of maintenance, such as replacement of gear units or other components having a weight that does not exceed the lifting capacity of the portable crane. The portable crane may, e.g., have a lifting capacity of 100 metric tons.

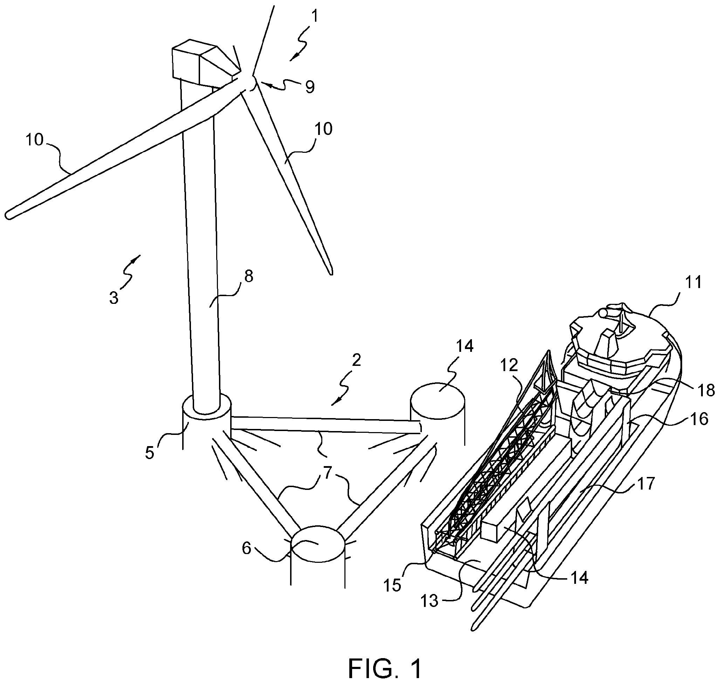

In figure 1 is shown a floating wind turbine unit 1. It comprises a floating sub-structure 2 and a wind turbine 3. The floating substructure is triangular in shape and comprises three cylindrical pontoons 4, 5, 6, which are connected by tubular beams 7. The wind turbine 2 has a tower 8, which is attached to one of the pontoons 5, and a rotor 9 with blades 10.

The shown wind turbine unit is only an example. It may have other designs, such as the one shown in co-pending NO20201030. The only requirement is that it can carry a crane, which will be described below.

Next to the floating wind turbine unit 1 (hereafter just referred to as "unit") is a support vessel 11. The vessel 11 is equipped with a ship crane 12, which is permanently attached to the vessel 11. It also has a cargo area 13 on the deck. As can be seen, the cargo is initially a portable crane 14, a truss beam 15, a first set of empty blade cradles 18 and a second set of blade cradles 16 with blades 17 which will all be explained further below.

The vessel 11 can be anchored next to the unit or may be held in position by DP (dynamic positioning).

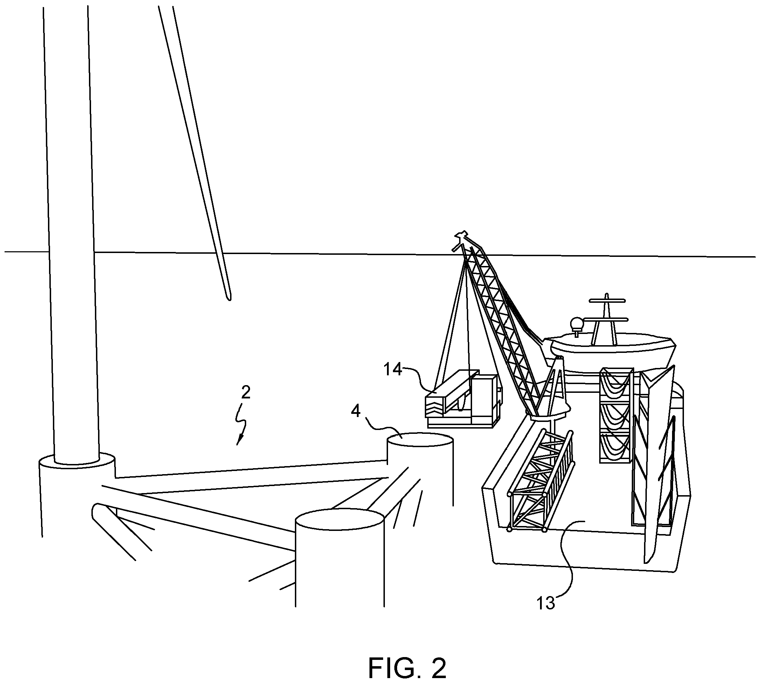

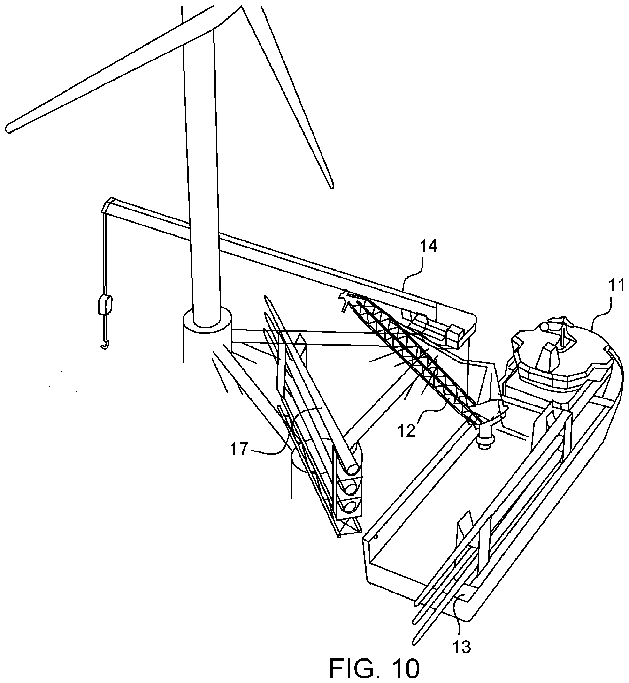

Figures 2 -12 show step by step an operation to replace the blades 10 of the wind turbine 1 with new blades 17. This is an operation that has to be done at intervals as the blades get worn by erosion from wind, rain, ice, heating and cooling, insects, birds and lightning strikes. Depending on the local conditions, the blades have to be replaced every 10-20 year.

Figure 2 shows a first step in the blade replacement operation. The ship crane 12 has started to lift the portable crane 14 from the cargo deck 13.

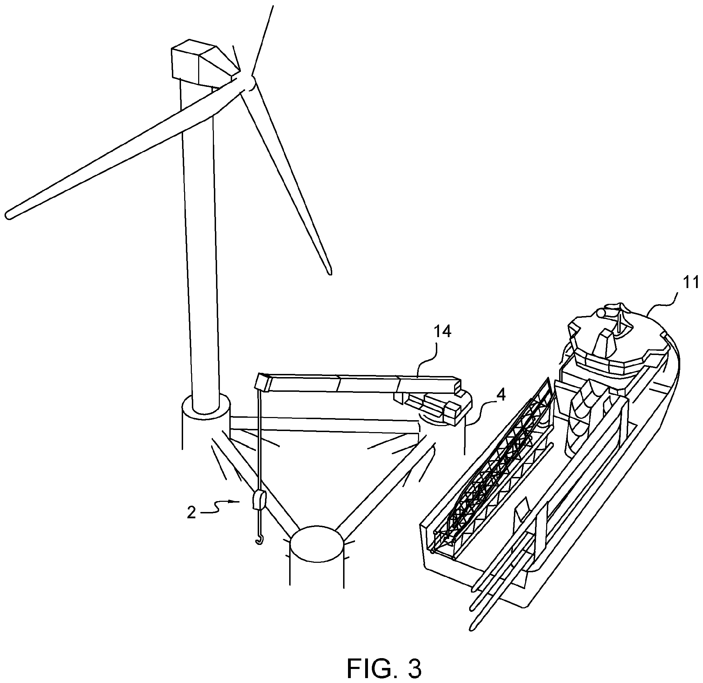

In figure 3 the portable crane 14 has been placed on top of one of the pontoons 4. The pontoon 4 has been equipped with an interface that readily can mate with the underside of the crane 14. The crane 14 is securely locked onto the pontoon 4 via the interface. How the interface and locking means are designed will be a choice to the person of skill. Many options are readily available in the field.

The portable crane may have its own power supply, such as by an onboard battery or generator, or a cable may extend from the vessel 11 to the crane 14. The crane 14 is conveniently remotely operated from the vessel 11. The operator may then be at a safe distance and follow the operation of the crane via cameras installed on the crane 14.

With the crane 14 in place on the unit 1 it can be used to lift items from the vessel 11 to the unit. However, the crane 12 on the vessel may also be used, if it is more convenient.

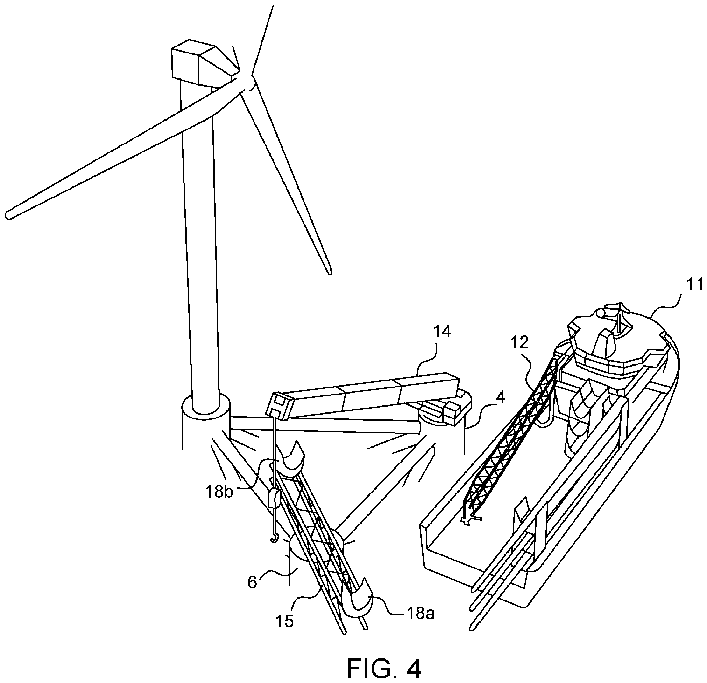

Figure 4 shows a truss beam 15 having been lifted off from the vessel and installed on top of a pontoon 6. The interface between the beam 15 and the pontoon 6 can be the same as the interface between the crane 14 and the pontoon 5. On top of the beam 15 a first cradle comprising two supports 18a and 18b.

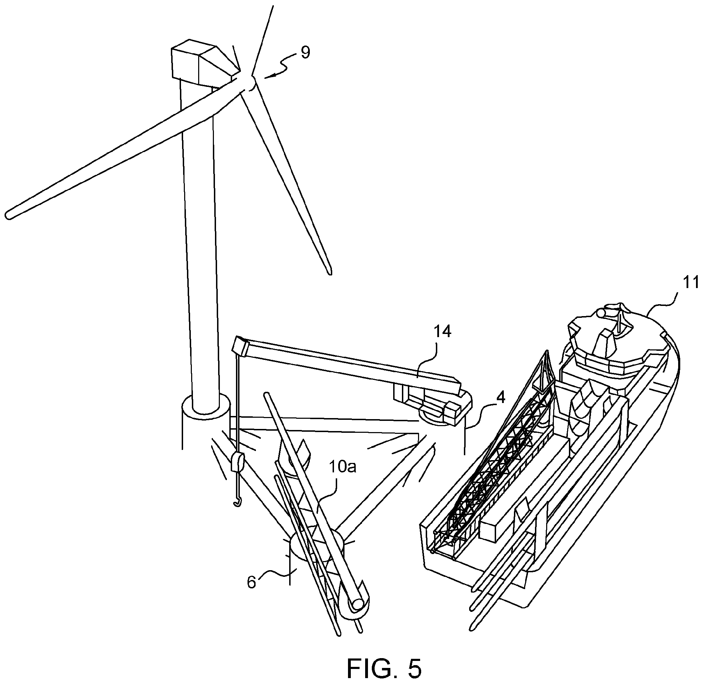

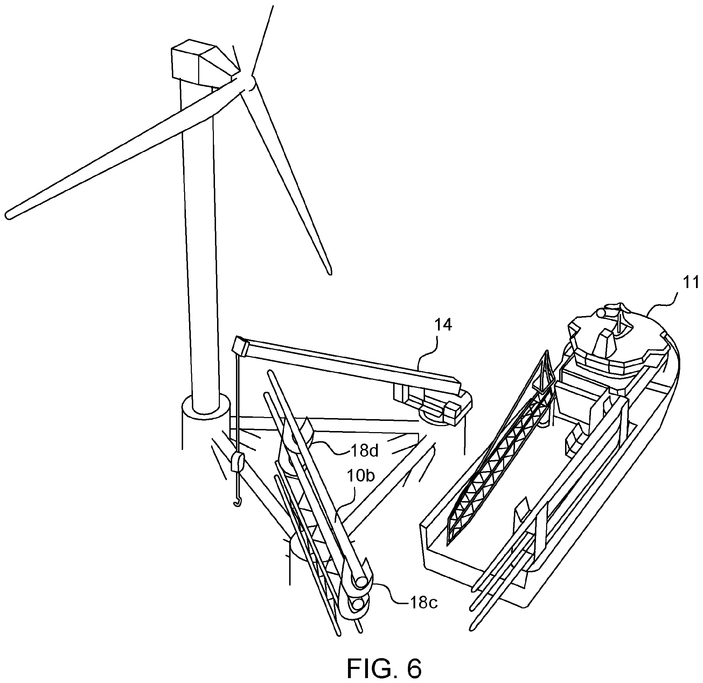

Now the removal of the work blades 10 can start. In figure 5 a first blade 10a has been lifted off from the rotor 9 by the crane 14 and placed in the cradle 18a, 18b. Next a new cradle comprising supports 18c, 18d is placed on top of the first cradle, and a second worn blade 10b is lifted off the rotor 9 by the crane 14 and placed in the cradle 18c, 18b, as shown in figure 6.

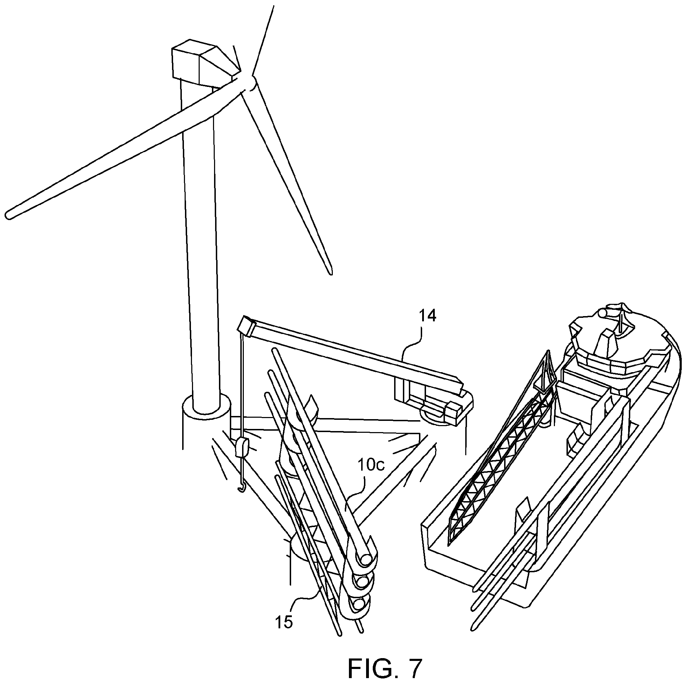

The last blade 10c is lifted and placed in a cradle in the same way as the previous blade 10b, so that, as shown in figure 7, all blades are orderly stacked on top of the beam 15.

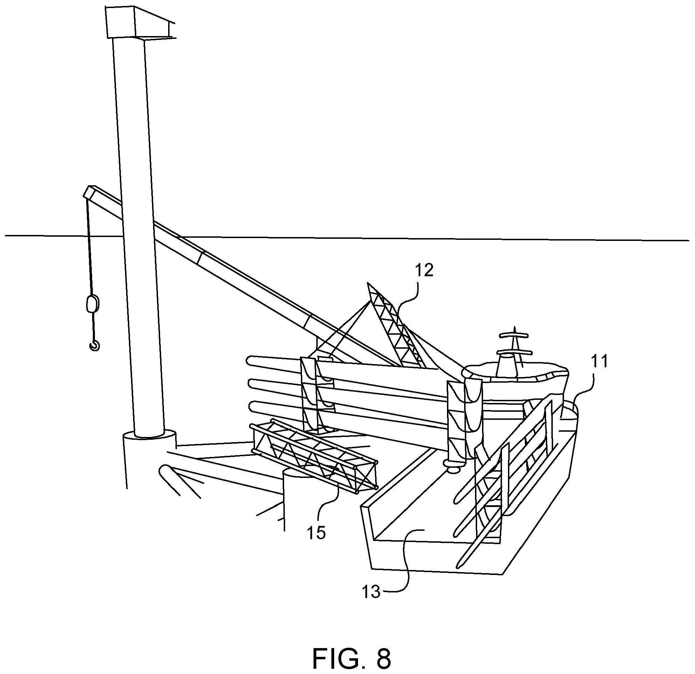

As shown in figure 8, the stack of blades 10a, b, c is lifted off from the beam 15. This can be done by the ship crane 12, or by the portable crane 14. It is, however, in general more convenient to use the crane that is on the unit where the load is to be placed. This is because it is easier to time the lifting off of the load than the putting down with the wave movements.

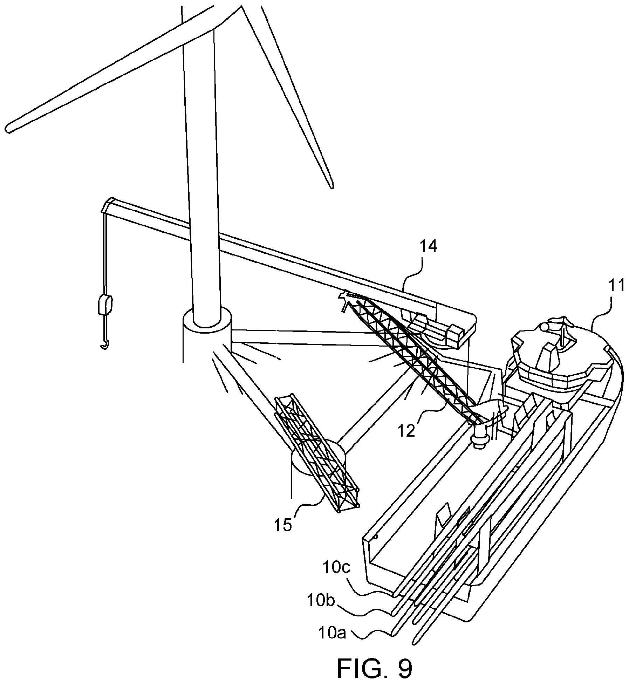

In figure 9 the stack of work blades 10a, b, c has been placed on the cargo deck 13 of the vessel 11.

Now the stack of new blades 17 is lifted from the vessel 11 and placed on the truss beam 15. Now the portable crane can lift the blades 17 to the nacelle for attachment. As each blade 17 is lifted, the cradles on which it was resting are lifted on board the vessel 11.

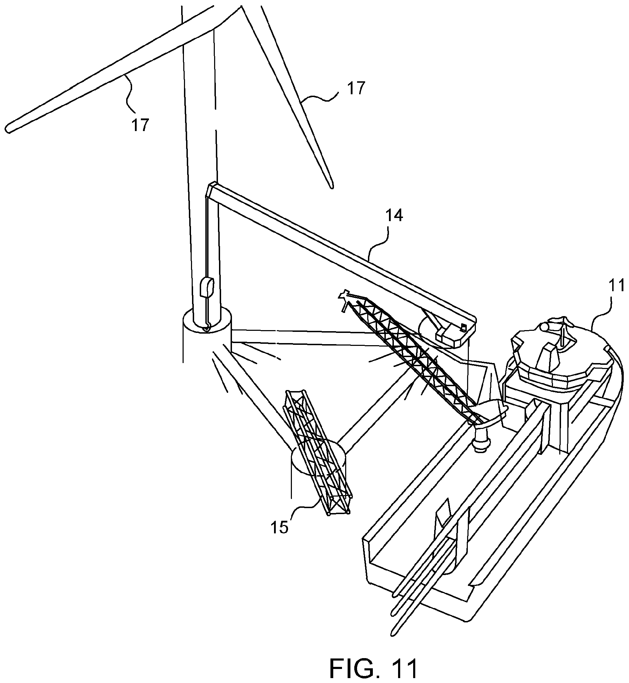

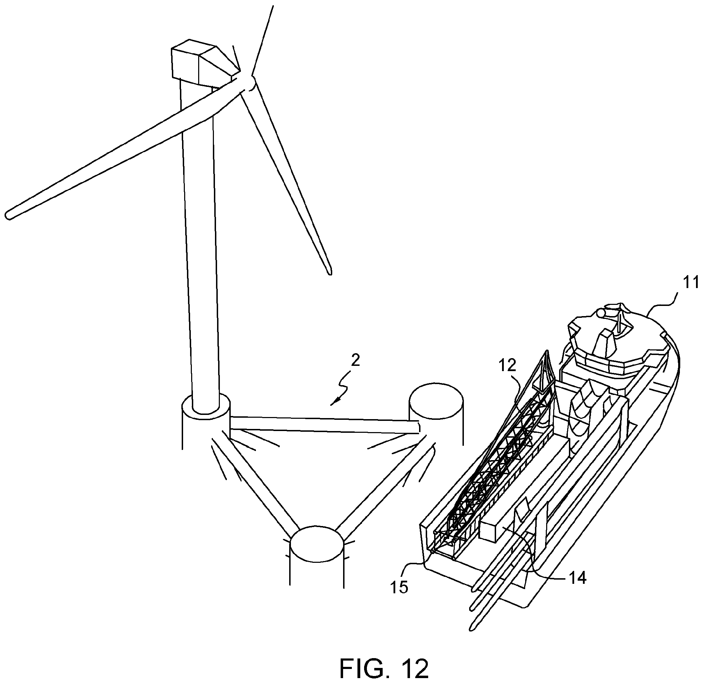

In figure 11, the new blades 17 have all been installed. Now the truss beam 15 is lifted on board the vessel. When this has been completed, the crane 14 itself is released and lifted on board the vessel by the ship crane 12. The operation is now completed, as shown in figure 12. The vessel 11 can now travel back to port to unload the worn blades 10, and if needed, take a new stack of blades on board for replacement of blades of another wind turbine.

The truss beam 15 may of course be replaced by another support that reliably supports the blades, such as a platform. The blades may also be arranged side by side on the support. However, stacking is more convenient as it saves space on the deck.

The fixation of the portable crane is preferably done without any persons having to be on the floating sub-structure, such as through automatic clamps.

## Claims

1. An operations and maintenance arrangement for floating wind turbines, comprising a floating sub-structure (2) on which at least one wind turbine unit (3) is situated, a service operation vessel (11) and a portable crane (14), said floating sub-structure (2) having an interface capable of receiving and fixedly locking said crane (14) to said sub-structure (2), said service operation vessel (11) having a ship crane (12) capable of lifting said portable crane (14) from said vessel (11) and onto said sub-structure (2), **characterized in that** said arrangement further comprising a support to receive components, such as wind turbine blades (10, 17) or gear units, to be installed on the wind turbine (3), said support having an interface to mate and fixedly lock with an interface on said floating sub-structure (2).

2. The arrangement of claim 1, wherein said support comprises at least one set of cradles (16, 18) to receive at least one wind turbine blade (10, 17).

3. The arrangement of claim 2, wherein at least three wind turbine blades (10) are stacked in cradles (16, 18) on said support.

4. The arrangement of any of claims 1-3, wherein said support comprises a truss beam (15).

5. The arrangement of claim 1 , wherein said floating sub-structure (2) comprises at least two pontoons (4, 6), each having an interface to receive a respective one of said portable crane (14) and said support.

6. A method of replacing components, such as wind turbine blades (10, 17) or gear units, of a floating wind turbine (1), comprising the following steps:
a. deploying a service operation vessel (11) next to a floating wind turbine (1),
b. lifting, using a ship crane (12) on said vessel (11), a portable crane (14) from said vessel (11) onto a sub-structure (2) of said floating wind turbine (1),
c. fixedly locking said portable crane (14) to said sub-structure (2),
d. lifting component support (15) onto said sub-structure,
e. fixedly locking said component support to said sub-structure,
f. lifting a component to be replaced from said wind turbine onto said component support, using said portable crane (14),
g. lifting said component from said component support onto said vessel (11),
h. lifting a new component onto said component support,
i. lifting said new component onto said wind turbine (1) and attaching it to where said component to be replaced used to be,
j. lifting said empty support onto said vessel (11), and
k. lifting said portable crane (14) onto said vessel, using said ship crane (12).

7. The method of claim 6, wherein said component is a set of wind turbine blades (10), wherein,
l. said lifting defined under point f. comprises lifting worn blades (10) one by one from a rotor (9) of said wind turbine (3) onto said support, using said portable crane (14),
m. said lifting defined under point g. comprises lifting a stack of said worn blades (10) from said blade support onto said vessel (11),
n. said lifting defined under point h. comprises lifting a stack of new blades (17) onto said blade support, and
o. said lifting under point i. comprises lifting said new blades (17) one by one to said rotor (9), using said portable crane (14).

## Patentansprüche

1. Betriebs- und Wartungsanordnung für schwimmende Windturbinen, umfassend eine schwimmende Unterstruktur (2), auf der sich mindestens eine Windturbineneinheit (3) befindet, ein Service-Betriebswasserfahrzeug (11) und einen tragbaren Kran (14), wobei die schwimmende Unterstruktur (2) eine Schnittstelle aufweist, die in der Lage ist, den Kran (14) aufzunehmen und fest an der Unterstruktur (2) zu verriegeln, wobei das Service-Betriebswasserfahrzeug (11) einen Schiffskran (12) aufweist, der in der Lage ist, den tragbaren Kran (14) von dem Wasserfahrzeug (11) auf die Unterstruktur (2) zu heben,
**dadurch gekennzeichnet, dass** die Anordnung ferner eine Halterung umfasst, um Komponenten aufzunehmen, wie Windturbinenblätter (10, 17) oder Getriebeeinheiten, die an der Windturbine (3) installiert werden sollen, wobei die Halterung eine Schnittstelle aufweist, um mit einer Schnittstelle auf der schwimmenden Unterstruktur (2) zusammenzupassen und fest zu verriegeln.

2. Anordnung nach Anspruch 1, wobei die Halterung mindestens einen Satz von Gestellen (16, 18) umfasst, um mindestens ein Windturbinenblatt (10, 17) aufzunehmen.

3. Anordnung nach Anspruch 2, wobei mindestens drei Windturbinenblätter (10) in Gestellen (16, 18) auf der Halterung gestapelt sind.

4. Anordnung nach einem der Ansprüche 1 bis 3, wobei die Halterung einen Binder (15) umfasst.

5. Anordnung nach Anspruch 1, wobei die schwimmende Unterstruktur (2) mindestens zwei Pontons (4, 6) umfasst, die jeweils eine Schnittstelle aufweisen, um ein jeweiliges eines des tragbaren Krans (14) und der Halterung aufzunehmen.

6. Verfahren zum Ersetzen von Komponenten, wie Windturbinenblätter (10, 17) oder Getriebeeinheiten, einer schwimmenden Windturbine (1), umfassend die folgenden Schritte:
a. Einsetzen eines Service-Betriebswasserfahrzeugs (11) neben einer schwimmenden Windturbine (1),
b. Anheben, unter Verwendung eines Schiffskrans (12) auf dem Wasserfahrzeug (11), eines tragbaren Krans (14) von dem Wasserfahrzeug (11) auf eine Unterstruktur (2) der schwimmenden Windturbine (1),
c. Festes Verriegeln des tragbaren Krans (14) mit der Unterstruktur (2),
d. Anheben der Komponentenhalterung (15) auf die Unterstruktur,
e. Festes Verriegeln der Komponentenhalterung mit der Unterstruktur,
f. Anheben einer auszutauschenden Komponente von der Windturbine auf die Komponentenhalterung unter Verwendung des tragbaren Krans (14),
g. Anheben der Komponente von der Komponentenhalterung auf das Wasserfahrzeug (11),
h. Anheben einer neuen Komponente auf die Komponentenhalterung,
i. Anheben der neuen Komponente auf die Windturbine (1) und Anbringen an der Stelle, an der sich zuvor die zu ersetzende Komponente befand,
j. Anheben der leeren Halterung auf das Wasserfahrzeug (11) und
k. Anheben des tragbaren Krans (14) auf das Wasserfahrzeug unter Verwendung des Schiffskrans (12).

7. Verfahren nach Anspruch 6, wobei die Komponente ein Satz von Windturbinenblättern (10) ist, wobei
l. das unter Punkt f. definierte Anheben das Anheben verschlissener Blätter (10) einzeln von einem Rotor (9) der Windturbine (3) auf die Halterung umfasst, unter Verwendung des tragbaren Krans (14),
m. das unter Punkt g. definierte Anheben das Anheben eines Stapels abgenutzter Blätter (10) von der Blatthalterung auf das Wasserfahrzeug (11) umfasst,
n. das unter Punkt h. definierte Anheben das Anheben eines Stapels neuer Blätter (17) auf die Blatthalterung umfasst, und
o. das unter Punkt i. definierte Anheben das Anheben der neuen Blätter (17) einzeln zu dem Rotor (9) umfasst, unter Verwendung des tragbaren Krans (14).

## Revendications

1. Agencement d'opérations et de maintenance destiné à des éoliennes flottantes, comprenant une sous-structure flottante (2) sur laquelle au moins une unité d'éolienne (3) est située, un navire d'opérations de service (11) et une grue portable (14), ladite sous-structure flottante (2) ayant une interface capable de recevoir et de verrouiller fixement ladite grue (14) à ladite sous-structure (2), ledit navire d'opérations de service (11) ayant une grue de bateau (12) capable de lever ladite grue portable (14) à partir dudit navire (11) et vers et sur ladite sous-structure (2), **caractérisé en ce que** ledit agencement comprend en outre un support pour recevoir des composants, tels que des pales d'éolienne (10, 17) ou des réducteurs, à installer sur l'éolienne (3), ledit support ayant une interface pour s'accoupler et se verrouiller fixement avec une interface sur ladite sous-structure flottante (2).

2. Agencement selon la revendication 1, dans lequel ledit support comprend au moins un ensemble de socles (16, 18) pour recevoir au moins une pale d'éolienne (10, 17).

3. Agencement selon la revendication 2, dans lequel au moins trois pales d'éolienne (10) sont empilées dans les socles (16, 18) sur ledit support.

4. Agencement selon l'une quelconque des revendications 1 à 3, dans lequel ledit support comprend une poutre-ferme (15).

5. Agencement selon la revendication 1, dans lequel ladite sous-structure flottante (2) comprend au moins deux pontons (4, 6), ayant chacun une interface pour recevoir un respectif parmi ladite grue portable (14) et ledit support.

6. Procédé de remplacement de composants, tels que des pales d'éolienne (10, 17) ou des réducteurs, d'une éolienne flottante (1), comprenant les étapes suivantes :
a. déploiement d'un navire d'opérations de service (11) à côté d'une éolienne flottante (1),
b. levage, à l'aide d'une grue de bateau (12) sur ledit navire (11), d'une grue portable (14) à partir dudit navire (11) vers et sur une sous-structure (2) de ladite éolienne flottante (1),
c. verrouillage fixe de ladite grue portable (14) à ladite sous-structure (2),
d. levage d'un support de composant (15) vers et sur ladite sous-structure,
e. verrouillage fixe dudit support de composant à ladite sous-structure,
f. levage d'un composant à remplacer à partir de ladite éolienne vers et sur ledit support de composant, à l'aide de ladite grue portable (14),
g. levage dudit composant à partir dudit support de composant vers et sur ledit navire (11),
h. levage d'un nouveau composant vers et sur ledit support de composant,
i. levage dudit nouveau composant vers et sur ladite éolienne (1) et fixation de celui-ci à l'endroit où ledit composant à remplacer doit se trouver,
j. levage dudit support vide vers et sur ledit navire (11), et
k. levage de ladite grue portable (14) vers et sur ledit navire, à l'aide de ladite grue de bateau (12).

7. Procédé selon la revendication 6, dans lequel ledit composant est un ensemble de pales d'éolienne (10), dans lequel,
l. ledit levage défini au point f. comprend le levage de pales (10) usées, une par une, à partir d'un rotor (9) de ladite éolienne (3) vers et sur ledit support, à l'aide de ladite grue portable (14),
m. ledit levage défini au point g. comprend le levage d'une pile desdites pales (10) usées à partir dudit support de lame vers et sur ledit navire (11),
n. ledit levage défini au point h. comprend le levage d'une pile de nouvelles pales (17) vers et sur ledit support de lame, et
o. ledit levage au point i. comprend le levage desdites nouvelles pales (17) une par une vers ledit rotor (9), à l'aide de ladite grue portable (14).
